# EUROPEAN PATENT SPECIFICATION

(11) **EP 0 688 176 B1**
(45) Date of publication and mention of the grant of the patent: **30.07.1997**
(21) Application number: 94908211.9
(22) Date of filing: 18.02.1994
(51) Int. Cl.: A47J 43/04, A47J 43/07, B01F 7/02, B01F 7/24

(54) **FOOD MIXER**
MIXGERÄT FÜR LEBENSMITTEL
BATTEUR POUR ALIMENTS

(30) Priority: 18.02.1993 AU PL7336/93
(43) Date of publication of application: 27.12.1995
(73) Proprietor: LAWSON, Anthony Charles, Hongkong (HK)
(72) Inventor: LAWSON, Anthony Charles, Hongkong (HK)
(74) Representative: Bayliss, Geoffrey Cyril
(86) International application number: AU9400073
(87) International publication number: WO9418877

(56) References cited:
- EP-A- 0 193 865
- FR-A- 453 862
- FR-A- 1 086 487
- FR-A- 1 159 265
- FR-A- 2 312 295
- FR-A- 2 637 484
- GB-A- 876 419
- GB-A- 1 468 493
- US-A- 5 233 916
- PATENT ABSTRACTS OF JAPAN, C903, page 36; & JP,A,03 237 945 (MATSUSHITA ELECTRIC IND CO LTD) 23 October 1991 (23.10.91).
- PATENT ABSTRACTS OF JAPAN, C885, page 103; & JP,A,03 193 013 (MATSUSHITA ELECTRIC IND CO LTD) 22 August 1991 (2.08.91).

## Description

This invention relates to a food mixer and particularly to a power operated food mixer.

Most food mixers have either had pairs of beaters which rotate about parallel axis so that the beater heads inter-engage and the material being mixed tends to pass between the heads.

In some other applications, where heavier materials are being beaten or kneaded, a single blade is used and this blade may either be shaped, as in a dough hook or have a surface which is open and through and around which the material being mixed passes.

FR-A-1159265 discloses a mixer having a container, a screw impeller moulded in a lower part of the container for rotation about a vertical axis and a drive shaft extending through a gland in the container bottom for rotating the impeller. No safeguard is provided to prevent injury to a user's fingers by the impeller when operating the mixer.

To solve this problem, this invention provides a mixer having a container, a screw impeller and driving means for the impeller; wherein the container has an opened topped hollow sleeve adjacent the lower surface of the container with an opening into the sleeve adjacent the lower edge thereof, and the screw impeller is located in the sleeve whereby material to be mixed can enter the sleeve through the opening adjacent the lower end thereof, be mixed by the impeller, delivered through the open top of the sleeve and permitted to pass into the container to again enter the sleeve.

It is preferred that the container is, internally, substantially part spherical with the sleeve being substantially radial to the container.

Alternatively, the container may have a lower surface which is at an angle to the horizontal and the axis of the sleeve can be parallel to the surface.

It is preferred that the drive shaft is axial of the cylinder and the impeller may be formed at its inner end to cooperate with the drive shaft whereby it can be rotated.

In an alternative form of the invention, the mixer may also act to chop the product being passed therethrough and, in one arrangement, the periphery of the impeller could be formed so that components can pass therebeneath and be cut or, alternatively, chopping blades could be incorporated in the impeller, preferably between turns of the flights thereof.

In order that the invention may be more readily understood, I small describe two particular embodiments or mixer made in accordance with the invention with reference to the accompanying drawings, in which:
- Figure 1: is a side view, partially sectionalised, of the mixer of the invention; and
- Figure 2: is a side view, partly sectionalised, of a second form of the mixer of the invention.

The mixer may have a body 10 within which there is located a motor 11 and drive shaft, the locations of which will be described further hereinafter.

The body may have a formed upper surface 13 to receive a container or mixing bowl 14 which may have any required shape and, as illustrated, is substantially cylindrical.

Located within the container 14 and at the lowest portion thereof, when it is located in the base 10, there is a hollow cylindrical sleeve 20, the inner end of which is connected to the wall of the container.

The sleeve has a pair of opposed openings 22 adjacent the lower portion thereof which openings may be of any required size and, if required, may be closed by a mesh which is of large enough spacings to permit the material to be mixed to pass therethrough relatively easily but small enough to prevent a finger or other relatively solid articles to pass therethrough.

The sleeve may be a fixture in the container or it could be removably connected therein. If it is removable, it may be preferred that there is an interlock to prevent operation of the impeller without a sleeve being in position.

Mounted in the body and axially of the sleeve 20, there is a drive assembly 23 and there is preferably a gland or seal (not illustrated) in the body through which this assembly can pass for connection with the motor drive shaft 12.

The motor may have a speed control 30 accessible to the exterior of the body so that a required speed of rotation can be selected by the operator. This speed control can also be used to reverse the direction of rotation of the motor 11 should this be required.

Removably located in the sleeve 20 is an helical impeller 25 which may be in the form of an Archimedean screw and which is adapted to pass into the sleeve and to be received in the drive assembly 23 therein. Whilst it is preferred that the impeller is in the form of an Archimedean screw, and I believe that this is the most efficient form, other impeller forms could be used.

Thus, when the impeller is passed into the sleeve, it will engage with the drive shaft 12 so that, on operation of the motor 11 the impeller will be rotated. It may be preferred that the impeller locks to or is otherwise retained on the drive shaft.

In use, the container 14 is located in position on the base 10 and the impeller 25 is passed into the sleeve 20 and engaged with the drive assembly 23.

The materials to be mixed are then added to the container and the motor started.

Some of the material will pass into the sleeve 20 through the apertures 22 therein and this will be carried upwardly by the impeller and the work being done will both mix the material and act to hold the impeller in engagement with the drive assembly 23. The material will be delivered from the open end 26 of the sleeve 20 from whence it will fall back into the container.

This process is, of course, continuous and the material in the container will, in a relatively short time, become homogeneous although, if there are small solid articles such as dried fruit or the like, these will not be damaged by the mixing process.

If there is any blockage of the movement, the motor could be reversed to tend to move the material in the opposite direction.

When mixing is completed, the motor 11 is stopped and the container 14 and the impeller 25 and/or the sleeve 20 can be removed from the base 10 and the contents of the container can be removed, the impeller can be removed from the sleeve and the material located thereabouts can be separated therefrom.

The impeller 25 and the container 14 can be made of material which can readily be washed, and preferably washed in a dish washer so that they can be cleaned, but it will be appreciated that cleaning is not difficult as the container itself has no difficult corners, the sleeve 20 can readily be accessed for cleaning and the impeller 25 can simply be cleaned by cleaning about the flight.

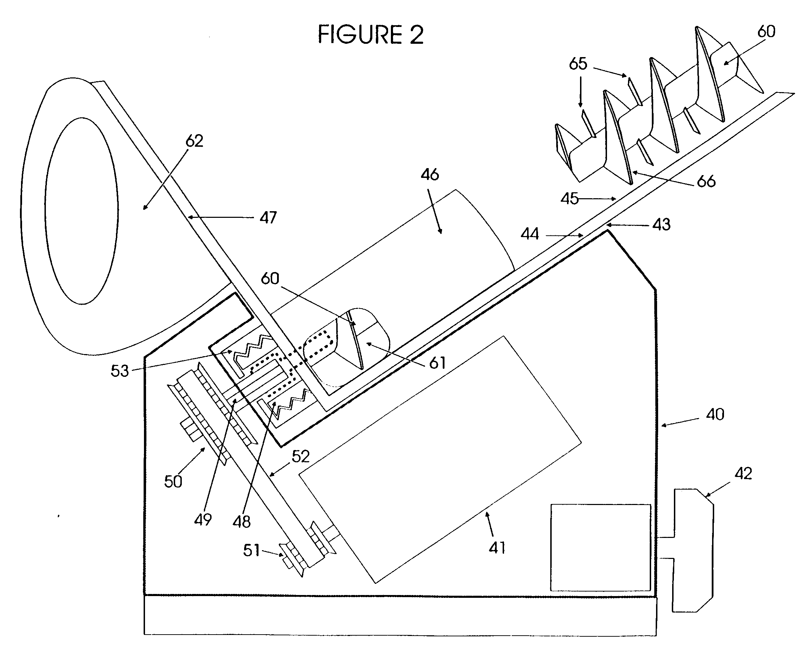

Referring now to Figure 2, there is a base 40 which includes a motor 41 and a speed control 42 accessible to a user.

The base 40 is formed with a face 43 which is adapted to receive a container 44 which has a surface 45 which is located, when on the base 40, at an angle to the horizontal and which is so formed that this surface 45 provides the lowest part of container 44. The outer end of the container being generally outwardly directed.

Located in the container there is a sleeve 46 which is connected to the face 43 and an end wall 47 of the container. Mounted within the end wall 47 there is a drive assembly 48 which, at its outer end is connected to the shaft 49 of a pulley 50.

In this embodiment, the motor 41 has a pulley 51 and has a belt 52 connecting it with pulley 50.

The diameters of the pulleys are selected to give the required speed of rotation but preferably the motor pulley 51 can be substantially smaller in diameter than the drive shaft pulley 50 to permit good torque transfer.

There is a liquid retaining gland 53 about the moving parts of the drive assembly to prevent loss of liquid from within the container.

The impeller 60, which is an Archimedean screw is adapted to pass within the sleeve 46 and to engage with the drive assembly 48 whereby it can be driven.

There are also, as illustrated a pair of apertures 61 into the sleeve whereby the product can enter the sleeve and be acted on by the impeller 60.

The container may have a handle or the like 62 connected thereto to permit readily handling of the product of the mixing.

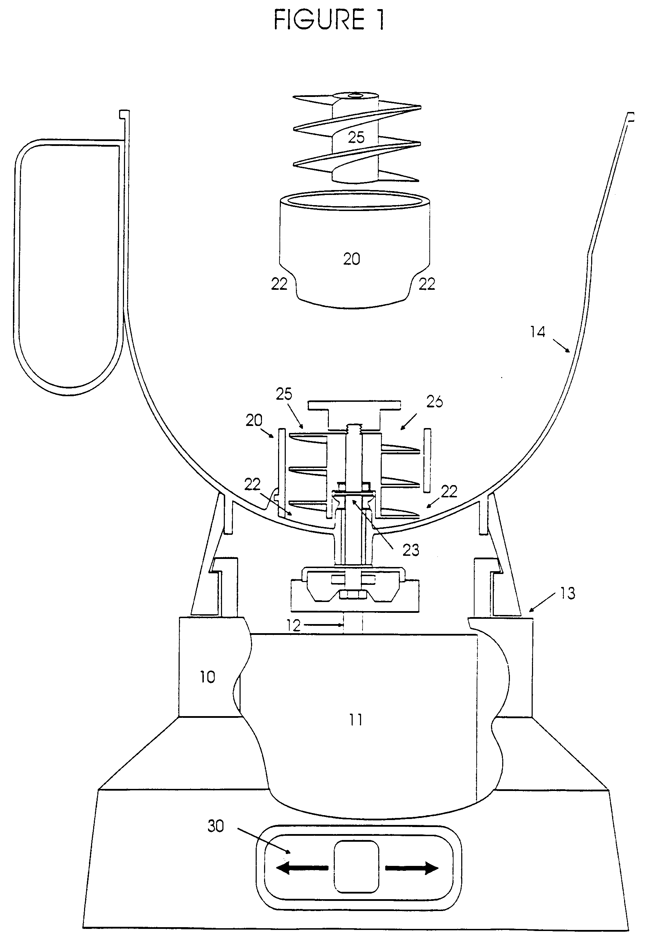

In operation, this embodiment is effectively identical to that of Figure 1 in that the material to be mixed is recirculated through the sleeve, drops to the junction of the side wall 44 and the end wall 47 where it can again be passed through the sleeve.

By using a modified impeller, it is possible to provide a chopping action as well as a mixing process.

In these modified forms, the cylindrical sleeve may be of metal or may have a metal insert to give a chopping surface. The alternative sleeve can be similar in form to the removable sleeve and can be relaced therefor if this is an alternative fitting.

In one form of the device, I provide the impeller flight with serrated or cut out portions at their periphery so that solid material can tend to pass beneath the flight but will then be cut by the adjacent portion.

In this form, the normal portions of the flights, that is the portions which are radial and arcuate and corresponding to the shape to the cylindrical insert can be sharpened so that solid material can be readily cut between the portion of the flight and the cylindrical sleeve.

In a second form of this aspect, as illustrated in the exploded impeller of Figure 2, I may provide knives or blades 65 extending radially outwardly between adjacent turns of the flight 66 of the impeller and these can effect a cutting action as the impeller is rotated.

If required, the knives or blades could be mounted on the impeller and capable of moving relative thereto and drive means may be provided to enable the knives or blades to rotate at a speed different to the impeller.

I can also provide, on the impeller and substantially parallel to the axis cutting blades which extend toward the next portion of the flight.

I could also provide projection or aperture on or in the impeller or the blade to assist in aeration of the products being mixed.

It will be seen in each such embodiment, the process is continuous, as described earlier in relation to mixing and the operator, as there is no obstruction to the open end of the container, can readily examine the mixture and to continue the cutting and mixing action for as long as is required.

It will be appreciated that the shape of the container can have a substantial effect on the operation and it is formed so as to permit the material that leaves the sleeve to fall back to the lowest position in the container, adjacent the aperture into the sleeve, for recycling and this also enables relatively small quantities of material to be effectively mixed.

Of course, notwithstanding the formation of the container and the sleeve there can be some material which is left, say on the wall of the container. It will be appreciated that this can readily be moved by a spatular or the like and the and the likelihood of damage to the implement is small as it would have to enter the sleeve before striking the impeller.

It will also be appreciated that there is no obstruction to the entrance to the container when mixing is occurring so that the person using the mixer can closely supervise the characteristics of the components being mixed, can add addition materials thereto without any difficulty and, as mentioned above, can also use an implement, particularly if the contents are relatively viscous, to feed the material into the aperture in the sleeve without there being any great likelihood of damage to the implement or the mixer as has generally previously been the case, particularly where parallel beaters are used.

This means that for the operator, a very satisfactory arrangement is available.

Whilst I have described herein a particular forms of drive and motor assembly it will be appreciated that this can be varied substantially depending upon the designed requirements, for example the motor could drive a gear box which, in turn, has the drive shaft extending therefrom. In such a case the motor may be parallel to or at right angles to the drive shaft.

Also the shape of container could vary and possibly different sized containers could have different shapes to optimise mixing for various quantities of materials.

## Claims

1. A mixer having a container (14), a screw impeller (25) and driving means (11,12) for the impeller; characterised in that the container has an opened topped hollow sleeve (20) adjacent the lower surface of the container with an opening (22) into the sleeve adjacent the lower edge thereof, and the screw impeller is located in the sleeve whereby material to be mixed can enter the sleeve through the opening adjacent the lower end thereof, be mixed by the impeller, delivered through the open top (26) of the sleeve and permitted to pass into the container to again enter the sleeve.

2. A mixer as claimed in claim 1, characterised in that the driving means for the impeller includes a motor (11) external of the container which can effect rotation of the impeller (25).

3. A mixer as claimed in claim 2, characterised in that there is a drive means (12) passing through the container in sealed relationship therewith, which drive means internally of the container is adapted for removable driving connection with the impeller (25).

4. A mixer as claimed in claim 3, characterised in that the drive means (12) is axial with the motor (11).

5. A mixer as claimed in claim 3, characterised in that the drive means (12) is indirectly driven by the motor.

6. A mixer as claimed in any preceding claim, characterised in that the sleeve (20) extends upwardly from the floor of the container (14) with its axis substantially normal to the floor.

7. A mixer as claimed in claim 6, characterised in that the container (14) is, internally, substantially part spherical with the sleeve being substantially radial to the container.

8. A mixer as claimed in claim 6 or claim 7, characterised in that the opening (22) into the sleeve is adjacent the junction between the sleeve and the floor of the container.

9. A mixer as claimed in claim 8, characterised in that there is more than one opening (22) in the sleeve.

10. A mixer as claimed in any one of claims 1 to 5, in which the container (14) has a lower surface which is at an angle to the horizontal and wherein the sleeve (20) has its axis parallel to the angled surface.

11. A mixer as claimed in any preceding claim, characterised in that the sleeve (20) is removable.

12. A mixer as claimed in any preceding claim characterised in that the container (14) is removably located on a support (13) which carries the driving means (11,12) for the impeller (14); and in that the impeller (25) is removably located in the sleeve.

13. A mixer as claimed in any preceding claim, characterised in that the impeller (25) is an Archimedean screw.

14. A mixer as claimed in claim 13, characterised in that cutting blades (65) are associated with the impeller (25) to enable a chopping action to be applied to the product as it passes through the sleeve.

15. A mixer as claimed in claim 14, characterised in that there are cutting blades (65) located on the impeller (25) between adjacent parts of the flight of the impeller.

16. A mixer as claimed in claim 14, characterised in that the periphery of the impeller (25) is formed to chop product as it passes through the sleeve (20).

## Patentansprüche

1. Mischer mit einem Behälter (14), einem Schaufelrad (25) und einer Antriebseinrichtung (11,12) für das schaufelrad;
**dadurch gekennzeichnet**, dass
der Behälter eine nach oben geöffnete hohle Hülse (20) enthält, die angrenzend an die untere Oberfläche des Behälters angeordnet ist, und die angrenzend an ihrem unteren Rand eine Öffnung (22) in die Hülse hinein aufweist, und dass das Schaufelrad in der Hülse angeordnet ist, wodurch das zu mischende Material durch die am unteren Ende der Hülse ausgebildete Öffnung in die Hülse gelangen kann, durch das Schaufelrad gemischt sowie durch das obere offene Ende (26) der Hülse abgegeben und wieder in den Behälter geleitet wird, um erneut in die Hülse zu gelangen.

2. Mischer nach Anspruch 1
**dadurch gekennzeichnet**, dass
die Antriebseinrichtung für das Schaufelrad einen Motor (11) außerhalb des Behälters aufweist, der die Drehung des Schaufelrades (25) bewirken kann.

3. Mischer nach Anspruch 2,
**dadurch gekennzeichnet**, dass
eine Treibeinrichtung (12) vorhanden ist, die sich in abgedichteter Weise durch den Behälter erstreckt, und die innerhalb des Behälters für eine entfernbare Antriebs-Verbindung mit dem Schaufelrad (25) ausgebildet ist.

4. Mischer nach Anspruch 3,
**dadurch gekennzeichnet**, dass
die Treibeinrichtung (12) axial mit dem Motor angeordnet ist.

5. Mischer nach Anspruch 3,
**dadurch gekennzeichnet**, dass
die Treibeinrichtung (12) vom Motor indirekt angetrieben wird.

6. Mischer nach einem der vorhergehenden Ansprüche,
**dadurch gekennzeichnet**, dass
sich die Hülse (20) vom Boden des Behälters (14) aufwärts erstreckt, wobei ihre Achse sich im Wesentlichen senkrecht zum Boden erstreckt.

7. Mischer nach Anspruch 6,
**dadurch gekennzeichnet**, dass
der Behälter (14) im Inneren über einen wesentlichen Teil sphärisch ist und die Hülse sich im Wesentlichen radial zum Behälter erstreckt.

8. Mischer nach Anspruch 6 oder 7,
**dadurch gekennzeichnet**, dass
die Öffnung (22) in die Hülse angrenzend an die Verbindung der Hülse mit dem Boden des Behälters angeordnet ist.

9. Mischer nach Anspruch 8,
**dadurch gekennzeichnet**, dass
mehr als eine Öffnung (22) in der Hülse vorgesehen ist.

10. Mischer nach einem der Ansprüche 1 bis 5, wobei der Behälter (14) eine untere Oberfläche aufweist, die in einem Winkel zur Horizontalen angeordnet ist, und wobei die Achse der Hülse (20) parallel zu der winkligen Oberfläche verläuft.

11. Mischer nach einem der vorhergehenden Ansprüche,
**dadurch gekennzeichnet**, dass
die Hülse (20) entfernbar ist.

12. Mischer nach einem der vorhergehenden Ansprüche,
**dadurch gekennzeichnet**, dass
der Behälter (14) entfernbar auf einem Support (13) angeordnet ist, der die Antriebseinrichtung (11,12) für das Schaufelrad (25) trägt; und dass das Schaufelrad (25) entfernbar in der Hülse angeordnet ist.

13. Mischer nach einem der vorhergehender Ansprüche,
**dadurch gekennzeichnet**, dass
das Schaufelrad (25) eine archimedische Schraube ist.

14. Mischer nach Anspruch 13,
**dadurch gekennzeichnet**, dass
dem Schaufelrad (25) Schneidblätter (65) zugeordnet sind, um eine zerhackende Wirkung auf das Produkt ausüben zu können, wenn es durch die Hülse geleitet wird.

15. Mischer nach Anspruch 14,
**dadurch gekennzeichnet**, dass
Schneidblätter (65) an dem Schaufelrad (25) zwischen angrenzenden Teilen des Schraubenganges des Schaufelrades angeordnet sind.

16. Mischer nach Anspruch 14,
**dadurch gekennzeichnet**, dass
die Peripherie des Schaufelrades (25) so ausgebildet ist, dass ein Produkt zerhackt wird, wenn es durch die Hülse (20) geleitet wird.

## Revendications

1. Mixeur ayant un récipient (14), un agitateur à hélice (25) et des moyens d'entraînement (11, 12) pour l'agitateur; caractérisé en ce que le récipient a un manchon creux à couvercle ouvert (20) adjacent à la surface inférieure du récipient avec une ouverture (22) dans le manchon qui est adjacente au bord inférieur de ce dernier, et l'agitateur à hélice se trouve dans le manchon ce qui fait que la matière devant être agitée peut pénétrer dans le manchon à travers l'ouverture adjacente à l'extrémité inférieure de ce dernier, être agitée par l'agitateur, être refoulée à travers le couvercle ouvert (26) du manchon et avoir la possibilité de passer dans le récipient pour pénétrer à nouveau dans la manchon.

2. Mixeur selon la revendication 1, caractérisé en ce que les moyens d'entraînement pour l'agitateur comprennent un moteur (11) extérieur au récipient qui peut faire tourner l'agitateur (25).

3. Mixeur selon la revendication 2, caractérisé en ce qu'il y a un moyen d'entraînement (12) passant à travers le récipient dans un rapport de fermeture hermétique avec ce dernier, lequel moyen d'entraînement intérieur au récipient est adapté à une liaison d'entraînement détachable avec l'agitateur (25).

4. Mixeur selon la revendication 3, caractérisé en ce que le moyen d'entraînement (12) s'étend axialement par rapport au moteur (11).

5. Mixeur selon la revendication 3, caractérisé en ce que le moyen d'entraînement (12) est entraîné indirectement par le moteur.

6. Mixeur selon l'une quelconque des revendications précédentes, caractérisé en ce que le manchon (20) s'étend vers le haut à partir du fond du récipient (14), son axe étant substantiellement perpendiculaire au fond.

7. Mixeur selon la revendication 6, caractérisé en ce que le récipient (14) est, à l'intérieur, substantiellement en partie sphérique, le manchon s'étendant substantiellement radialement par rapport au récipient.

8. Mixeur selon la revendication 6 ou la revendication 7, caractérisé en ce que l'ouverture (22) dans le manchon est adjacente à la jonction entre le manchon et le fond du récipient.

9. Mixeur selon la revendication 8, caractérisé en ce qu'il y a plus d'une ouverture (22) dans le manchon.

10. Mixeur selon l'une quelconque des revendications 1 à 5, dans lequel le récipient (14) a une surface inférieure qui fait un certain angle avec l'horizontale et dans lequel le manchon (20) a son axe qui est parallèle à la surface inclinée.

11. Mixeur selon l'une quelconque des revendications précédentes, caractérisé en ce que le manchon (20) est amovible.

12. Mixeur selon l'une quelconque des revendications précédentes caractérisé en ce que le récipient (14) est installé de manière amovible sur un support (13) qui porte les moyens d'entraînement (11, 12) pour l'agitateur (14); et en ce que l'agitateur (25) est installé de manière amovible dans le manchon.

13. Mixeur selon l'une quelconque des revendications précédentes, caractérisé en ce que l'agitateur (25) est une vis d'Archimède.

14. Mixeur selon la revendication 13, caractérisé en ce que des lames coupantes (65) sont associées à l'agitateur (25) pour permettre l'application d'une action de découpage sur le produit tandis que ce dernier passe à travers le manchon.

15. Mixeur selon la revendication 14, caractérisé en ce qu'interviennent des lames coupantes (65) se trouvant sur l'agitateur (25) entre des parties adjacentes du filetage de l'agitateur.

16. Mixeur selon la revendication 14, caractérisé en ce que la périphérie de l'agitateur (25) est formée de manière à découper le produit tandis que ce dernier passe à travers le manchon (20).
